# EUROPEAN PATENT APPLICATION

(11) **EP 2 128 596 A2**
(43) Date of publication of application: **02.12.2009**
(21) Application number: 08010576.0
(22) Date of filing: 11.06.2008
(51) Int. Cl.: G01N 11/00

(54) **Device for measuring viscosity**

(30) Priority: 26.05.2008 LV 080092
(71) Applicant: Latvijas Valsts Koksnes Kimijas Instituts (Latvian State Institute of Wood Chemistry), Riga LV 1006 (LV)
(72) Inventor: Vanags, Juris, Riga LV-1013 (LV); Viskins, Marks, Riga LV-1013 (LV)
(74) Representative: Dolgicere, Nina

(57) **Abstract**

The present invention relates to a field of measuring the viscosity of fluids and in particular to vibration pickups provided with piezoelectric transducers, and may be used in research laboratories also in control of technological processes, for example fermentation process. According to the present invention bimorph piezoelectric viscosity sensors may be used in fluids with high viscosity. This is provided by attaching the extension piece 2 consisting of the elastic plate 3 and the weight 4 to the end of the bimorph piezoelectric element 1, and the plane of the plate 3 is in agreement with the plane of the piezoelement 1, and the plane of the weight 4 is perpendicular to said plane of piezoelement 1. The present invention may be illustrated by drawing in Fig.2

## Description

The present invention relates to a field of measuring the viscosity of fluids and in particular to immersion vibration pickups provided with a piezoelectric transducer, and may be used in research laboratories and also in control of technological processes, for example, fermentation processes.

Determination of viscosity by means of piezoelectric transducers is based on measuring the damping decrement of oscillations of vibration-resonant piezoelectric sensing element excited by electric pulses. It is known in the art tuning fork-type viscosimeters in which the piezoelectric elements are located on legs of tuning fork, as described, for example, in RU patent No. 2 094 771. Such viscosimeters have complicated construction and they are difficult to use because of requirements for sterility of controlled process. The said vibration pickup comprises the tuning fork with two legs, piezoelectric transducers mounted at the base of the legs, and probe connected to the tuning fork; said piezoelectric transducers are installed in recesses located at the base of the legs. In order for measurements to be made the exciting voltage is previously determined without a contact of the tunings fork with a liquid (in air) and also a value of the exciting voltage in a sample body with a calibrated liquid is determined, and then a calibration dependence for subsequent determining the desired value of viscosity is obtained.

It is also known the method of determining viscosity described in international application WO 01/61312. This method consists in using of the bimorph piezoelectric element onto one of the plates of which the electric pulse generating its resonance oscillations is led. These oscillations initiate damped electric signal with resonance frequency of the selected piezoelement. The duration of the damping process of mechanical oscillations of the piezoelectric plate and consequently the duration of the electric signal picked up from electrodes of the second plate integrated with said piezoelectric plate depends on the viscosity of fluid, in which the piezoelectric viscosimeter is placed. The device for the embodiment of this method described in said international application is formed as a bimorph piezoelectric element, one plate of which is connected to an electric pulse generator, and an electric oscillation recorder is connected to electrodes of the second plate. Compared to other (from among the known ones) piezoelectric viscosimeters, such a device is characterized by ease of manufacturing and minimum sizes and a lack of additional constructional elements that might cause sterility failure of the fluid being studied.

The disadvantage of the viscosimeter with a bimorph piezoelectric element used for the embodiment of the method described in international application WO 01/61312 lies in short duration of damped oscillations. The use of this viscosimeter is limited to fluids with relatively low viscosity only.

It is the object of the present invention to broaden the range of application of the claimed invention for fluids with high viscosity.

This object is achieved by the use of a bimorph piezoelectric element connected to a holder by its one end and provided with extension piece in the form of a narrow elastic metal plate which is connected to the second end of the piezoelectric element. A free end of the extension piece carries a weight formed as a plate having for example a disc shape, said plate is oriented perpendicular to a plane of the piezoelectric element and the extension piece, i.e. arranged in a plane of propagation of oscillations of piezoelectric element. This extension piece responds to the oscillations of the piezoelectric element excited by an electric pulse and by its natural oscillations increases a total duration of oscillations generated by the electric pulse. As a piezoelement may be used the multilayer piezoelement PL128.10 of PI Ceramic GmbH company that has a relatively low exciting voltage (about 30V as compared to higher voltages that are not less than 100V typical for piezoelements of other companies) that may be of importance within the industrial application of a viscosimeter. The application of the piezoelement with multilayer structure allows increasing an initial amplitude of forced oscillations. The device may be provided with an outer perforated enclosure for operation of the device in fluids with local inhomogeneities.

The present invention may be illustrated by drawings, in which:

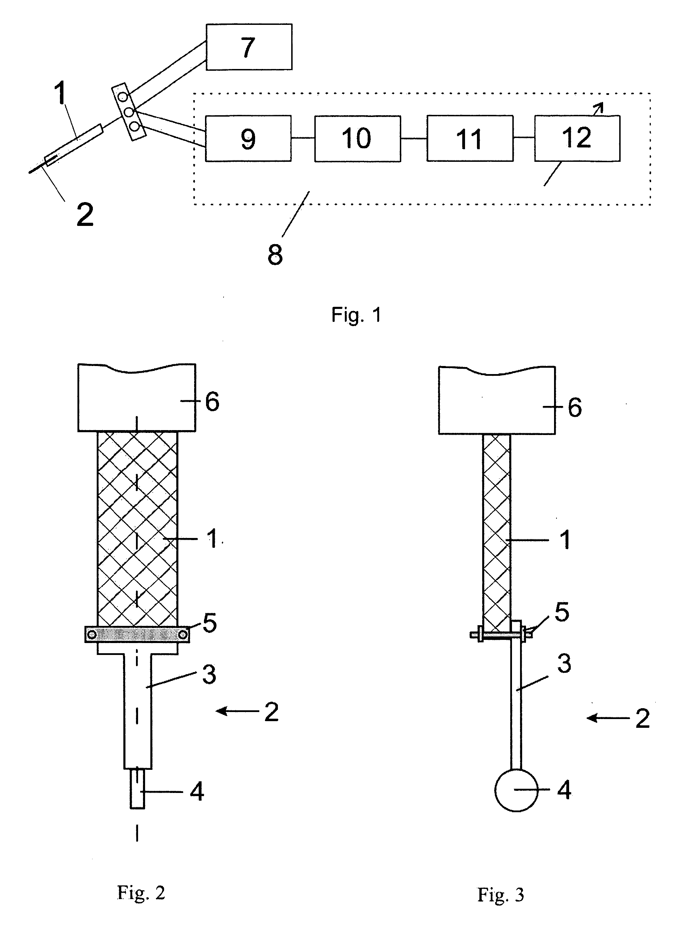

- Fig. 1 is a conventional circuit of measuring viscosity with block diagram of the device for processing of recorded signal;
- Fig. 2 is a front view of a viscosity sensor;
- Fig. 3 is a side view of a viscosity sensor;

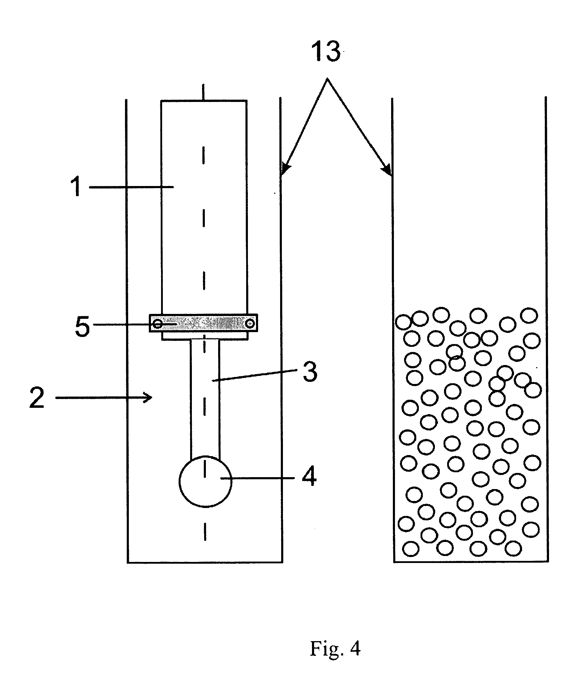

- Fig. 4 shows a perforated enclosure of a viscosity sensor;
- Fig. 5 shows forced damped oscillations - plate length relationship in the fluid with viscosity of 106 mPas;
- Fig. 6 shows forced damped oscillations - plate length relationship, but in the fluid with viscosity of 167 mPas;
- Fig. 7 - shows an oscillogram of forced damped oscillations in a case of the use of the piezoelement PL 128.10 without the use of extension piece (in fluid with viscosity of 167 mPas (in a fluid with viscosity 167 mPas);
- Fig. 8 - 11 - show oscillograms of damped oscillations of a piezoelement with an extension piece for fluids with various viscosity (1 mPas - 30 mPas - 106 mPas and 167 mPas).

The device for measuring viscosity comprises a bimorph piezoelectric element (piezoelement) 1, an extension piece 2 consisting of an elastic metal plate 3 and a weight 4 attached to the piezoelement 1 by means of a clamp 5. The piezoelement 1 is secured on a tubular holder 6. Inside the holder 6 there are conductors connecting electrodes of the piezoelement 1 to a pulse generator 7 and electric oscillation recorder 8, a comparator 9, a pulse counter 10 and a digital-analog converter 11, an output of which is connected to a data display device 12. The piezoelectric element 1 together with the extension piece 2 and the weight 4 may be placed in a protective perforated enclosure 13.

The device for measuring viscosity operates as follows. A pulse electric signal is led from the pulse generator 7 to one of the plates of the bimorph piezoelectric element 1. (In case of multilayer structure of the bimorph piezoelectric element 1 the electric pulse may be led to a set of parallel-connected plates). The piezoelectric element 1 excited by the electric pulse executes mechanical oscillations with a resonance frequency of the selected piezoelement. These oscillations are transmitted to the extension piece 2, which is rigidly connected to the piezoelement 1, and the free end of which has the weight 4. The extension piece 2 with the weight 4, that forms the analog of a pendulum makes natural oscillations lasting during oscillations of the piezoelectric element 1. The perpendicular arrangement of the plate of the weight 4 to a plane of the piezoelement 1 minimizes a resistance of fluid to oscillations of the extension piece 2. (This was experimentally proved by modifications of the weight 4 in the form of a ball or in the form of a plate lying in the plane of the piezoelement 1). The electric signal picked up from the second set of plates of the piezoelectric element 1 comes to the electric oscillation recorder 8. The received signal in the comparator 9 is compared with the preset value of voltage. All pulses with amplitude in excess of the preset value come to the pulse counter 10. The smaller the damping decrement of forced oscillations (the lower the fluid viscosity), the greater number of pulses comes to the pulse counter 10, and vice versa. Upon the conversion of the number of pulses by means of the digital-analog converter 11 the analog signal with a value corresponding to a value viscosity of studied fluid will be obtained at the output of said digital-analog converter 11.

During slow processes, for example, fermentation processes, possible is the formation of blobs in the studied fluid, said blobs being in the area where the elements of the device are arranged, may significantly enhance the damping of oscillations, thus changing the indications of the device from the true value of viscosity. In order to exclude this error the piezoelectric element 1 of the device with the extension piece 2 may be placed in the perforated enclosure 13 that keeps oscillating elements of the device out of inhomogeneities of the fluid.

The device having the elements of the following geometric sizes has been tested:
- bimorph piezoelement PL128.10 of PI Ceramic GmbH company: length - 31.0 mm, width - 6.3 mm, thickness - 0.75 mm;
- the elastic plate 3 of the extension piece 2: length - 25 mm, width - 4 mm, thickness - 0.5 mm;
- the weight 4: diameter - 7 mm, thickness - 0.5 mm.

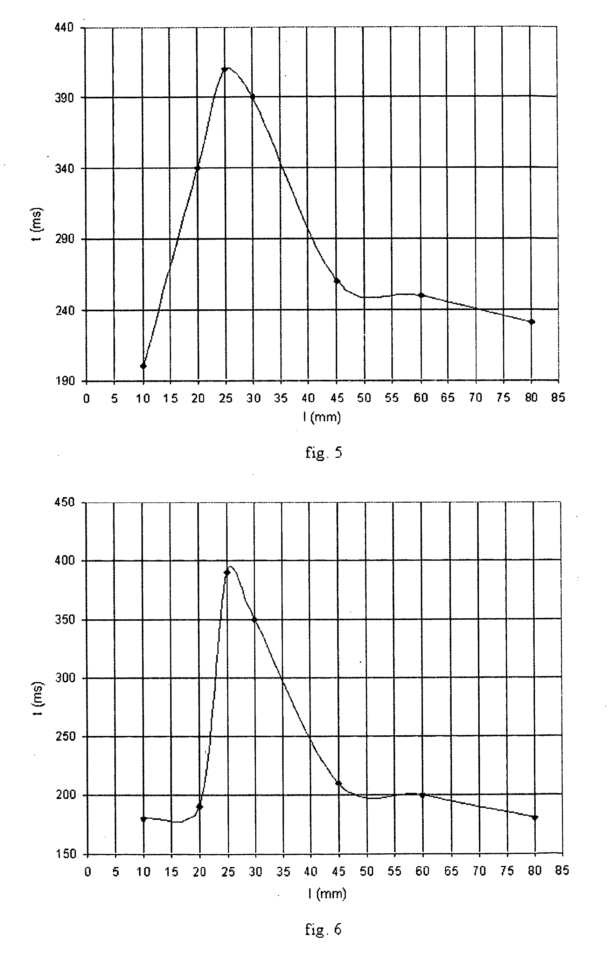

Said sizes of the extension piece 2, corresponding to optimal results were experimentally obtained. Fig. 5 shows the relationship between the duration **t** (ms) of damped oscillations and the length **I** (mm) of the metal plate 3 of the extension piece 2 in the tested fluid with the viscosity of 106 mPas. Fig. 6 shows the same relationship in the fluid with the viscosity of 167 mPas. It follows from these diagrams, firstly, that maximum duration of oscillation occurs at length of 25 mm of the plate 3, and secondly, this value remains unchanged in fluids with various viscosities. Stainless steel was used as material for the plate 3 and the weight 4 (in the case of a copper plate similar results were obtained). To study the influence of elastic properties of the plate comparative tests were carried out for the device with copper plates of various thicknesses - from 0.2 to 1.5 mm. Acceptable results were obtained in case of plates with thickness in the range from 0.5 to 0.8 mm.

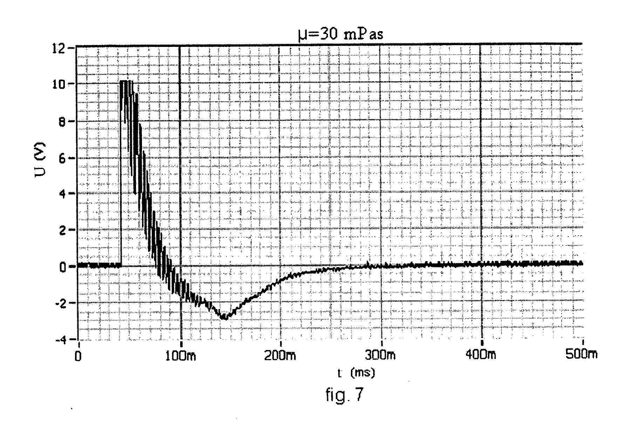

In the beginning for comparative evaluation of the results of the test of the proposed device the measurements of the time of oscillation damping were carried out with the use of the piezoelement PL128.10, but without the use of the proposed extension piece 2. Fig.7 shows the oscillogram of oscillations for this case in coordinates **t** (milliseconds) - **U** (voltage picked up from measuring plates of piezoelement 1, volts) (in the fluid with viscosity of 30 mPas)

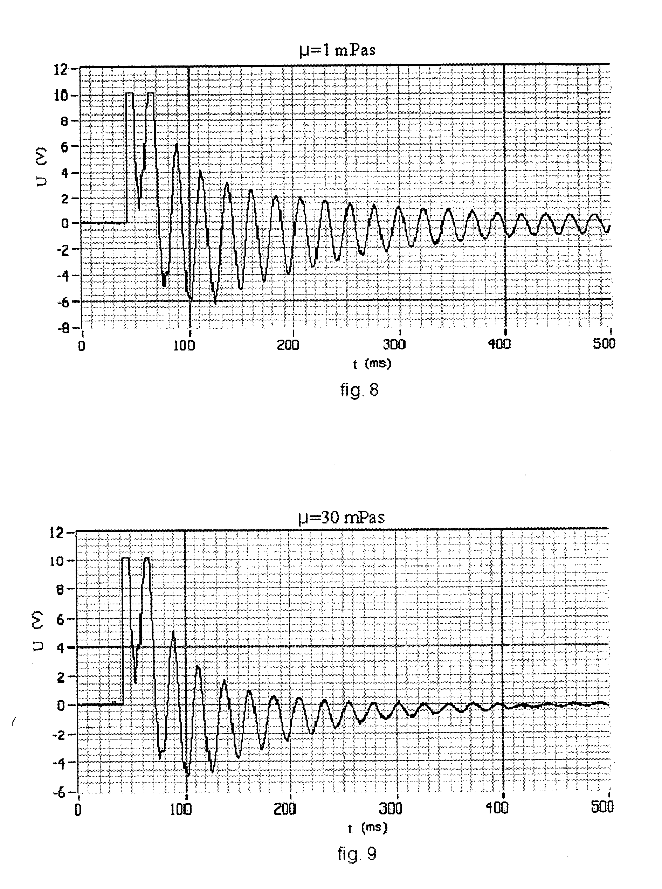

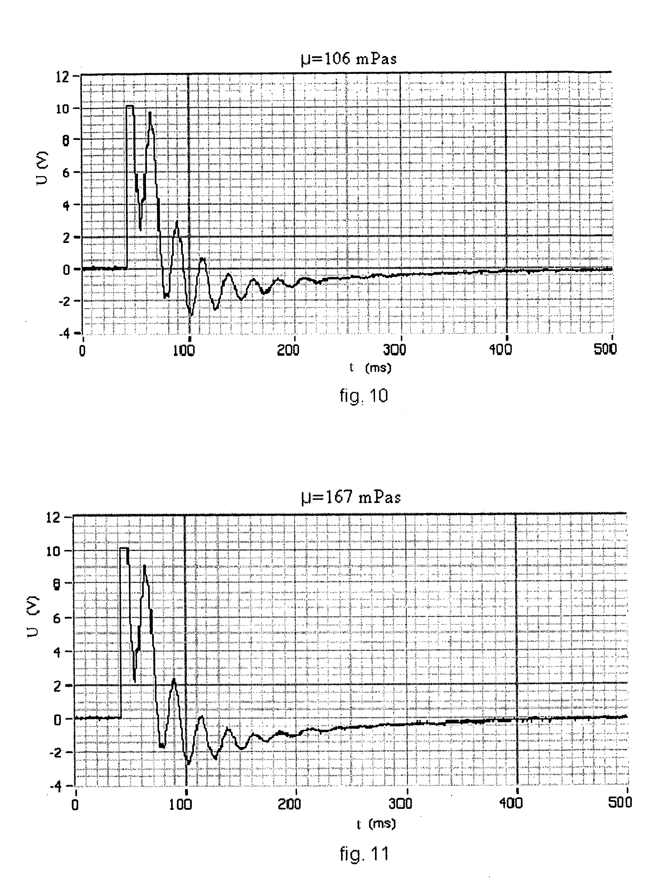

Fig. 8 - 11 show oscillograms of the voltage picked up from the measuring plates of the piezoelement 1 provided with the extension piece 2 of length 25 mm and placed in fluids with viscosity from 1.0 mPas (water) to 167 mPas. When comparing oscillograms of Fig. 7 and 9 (the same fluid in both cases, but with or without the use of extension piece 2) it is believed that recorded oscillation duration significantly increases (5-6 times) if the device for measuring viscosity is embodied according to the present invention.

## Claims

1. A device for measuring the viscosity of fluids comprising a bimorph piezoelectric element secured by its one end at a holder, pulse generator and electric oscillation recorder **characterized in that** the second end of the bimorph piezoelectric element is connected to an extension piece made in the form of elastic plate, for example, a metal plate lying in the plane of the piezoelement, and a free end of the plate is provided with a weight.

2. The device according to claim 1 **characterized in that** the weight is made, for example, in the form of a disc-shaped plate oriented perpendicular to the plane of the piezoelectric element.

3. The device according to claim 2 **characterized in that** the metal plate of the extension piece has the length from 25 to 35 mm.
